# EUROPEAN PATENT SPECIFICATION

(11) **EP 0 538 540 B1**
(45) Date of publication and mention of the grant of the patent: **11.12.1996**
(21) Application number: 91830452.8
(22) Date of filing: 24.10.1991
(51) Int. Cl.: H02B 1/30, A47B 47/03, A47B 87/00

(54) **A mechanical connection element for erecting unit furniture, particularly exposed and enclosed distribution boards**
Mechanisches Verbindungselement für montierbare Möbeleinheit, insbesondere für freistehende und geschlossene Verteileranlagen
Elément de connexion mécanique pour unité modulaire de meubles, notamment des tableaux de distribution de type ouvert ou étanche

(43) Date of publication of application: 28.04.1993
(73) Proprietor: BTICINO S.P.A., 20154 Milano (IT)
(72) Inventor: Boffelli, Roberto, I-24030 Mozzo (Bergamo) (IT)
(74) Representative: Maggioni, Claudio

(56) References cited:
- FR-A- 2 521 410
- US-A- 3 265 419

## Description

This invention relates to a mechanical connection element as defined in the preamble of claim 1 for erecting unit furniture, particularly but not solely intended for erecting electric boards of both the exposed and enclosed types.

As is known, unit furniture enjoy widespread acceptance on account of they being adapted to be assembled modularly into a number of different combinations to meet varying user's dimension and design demands. A typical example is provided by built-up space frames of metal, whereby a suitable combination of uprights and shelves can provide a full range of space frame configurations.

This type of structure lends itself well for quick assembly because it only requires a very small number of different parts. In the example considered, such parts would just include shelves, pitch pre-punched uprights, and screw members whereby the shelves can be secured in desired positions on the uprights.

On the other hand where more complex structures are to be erected, such as structures enclosed by curtain walls, having door wings, latches, trimming strips, etc., the use of assembly structures is inevitably made somewhat more difficult. This is due in the first place to the increased number of the parts involved, since elements must be provided for interconnecting mechanically the various parts of the structure, as well as specific elements for hinge mounting the door wings, abutting the latches, assembling the trimming strips, fixing panels, etc. In addition, the personnel detached to assemble the structure should be familiar with the above-mentioned parts, both to procure and install them as appropriate.

These factors have been contributory heretofore to restricting the use of assembly structures wherever items of furniture of some complexity are sought; a typical example of furniture that have discouraged the use or assembly structures is cabinet-mounted power distribution boards.

Such cabinet-mounted boards, or cabinets for brevity, are utilized to provide weather protection for electrical equipment against dust and rain contamination, for instance, as well as to inhibit unauthorized access to such equipment, and are available commercially in many different sizes and shapes to provide the user with a choice to suit. Cabinets so constructed, however, are bulky, difficult to transport, and require fairly large storage areas.

The underlying technical problem of this invention is to provide a mechanical connection element for erecting unit furniture, which can lower the number of parts involved in assembling structures, even fairly complex ones like the aforesaid distribution boards, and thus obviate the shortcomings with which the prior art is beset.

This problem is solved according to the invention by a mechanical connection element for erecting unit furniture, comprising a base having first means of attachment to a structural part of an item of furniture, a web extending from said base, and a head formed on the remote web end from the base, said head being formed with a first pair of holes aligned along a common axis parallel to the base and constituting sockets for a hinge pin to hingedly interconnect two structural parts of the item of furniture through said element, characterized in that said head comprises second releasable attachment means for a head of a second connection element or another structural part of the item of furniture.

The invention will be now described in detail with reference to a preferred embodiment thereof, shown by way of example and not of limitation in the accompanying drawings, where :

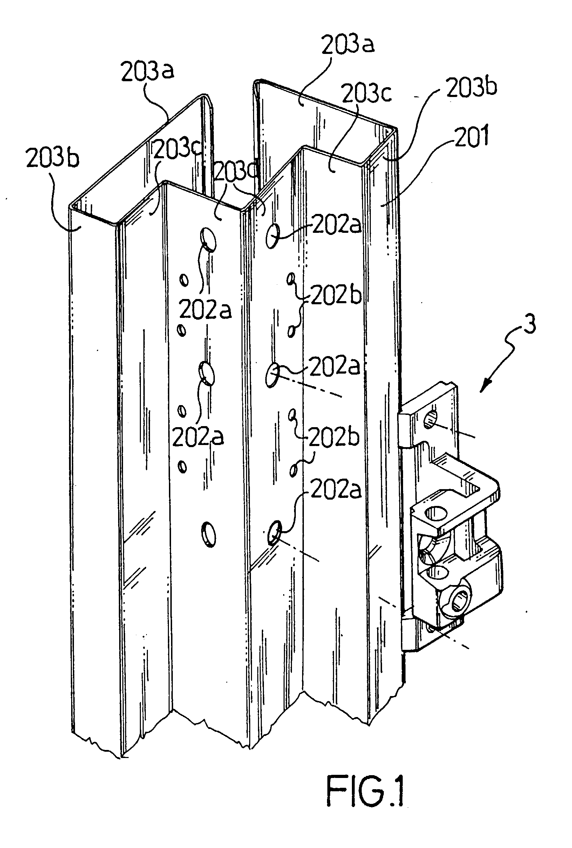

Figure 1 is a fragmentary exploded view showing in perspective a section bar with a connection element according to the invention applied thereto;
Figure 2 is an exploded perspective view of two connection elements according to this invention;
Figures 3 to 6 are front, side, plan, and a sectional view along VI-VI in Figure 3, respectively, of one of the connection elements shown in the preceding Figure;
Figure 7 is a sectional detail view of a cabinet formed from sections bars and connection elements of the kind shown in Figure 1;
Figure 8 is a further detail view in cross-section of such a cabinet;
Figure 9 shows a closure mechanism for such a cabinet; and
Figure 10 is an exploded perspective view of two connection elements according to a variation of the invention.

Shown at 1 in the drawing figures is a cabinet for electrical equipment embodying this invention.

This cabinet 1 comprises a frame 2 whereto there are mounted, using mechanical connection elements 3, such curtaining members as panels 4a, trimming strips 4b,c and door wings 4d.

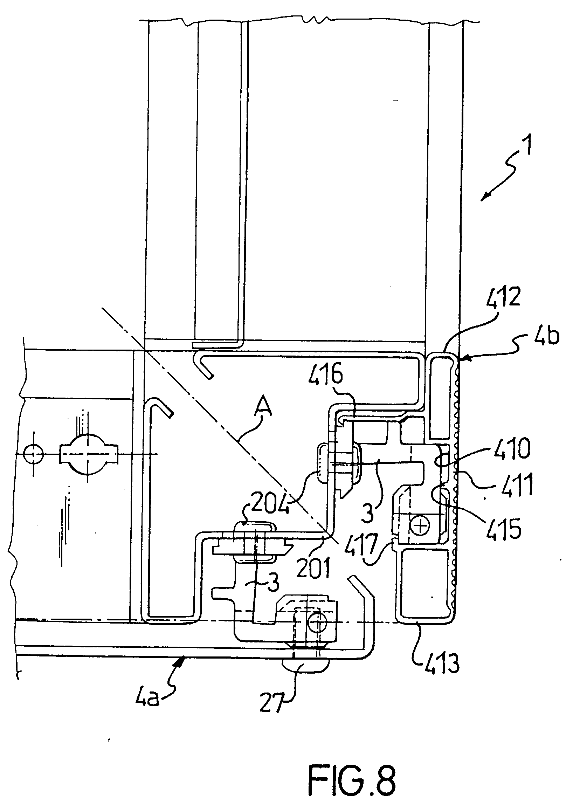

The cabinet frame 2 is formed by assembling section bars 201 together which are pre-punched at pitch intervals with holes and openings, respectively indicated at 202a,b. The section bars 201 have a symmetrical cross-sectional shape about a plane whose trace is indicated at A in Figure 8; the trace line A separates two identical parts, each having four straight sides 203a,b,c,d; sides 203a,b being perpendicular to each other and parallel to sides 203c,d, respectively.

Each trimming strip 4b (Figure 8) comprises two bodies 412, 413 of box-type construction running along the opposed longitudinal edges of an exposed surface designated 411. The bodies 412, 413 border a channel-like seat 410. A ridge 415 extends in the seat 410 between said bodies 412, 413 with spacer functions as explained hereinafter. Respective lugs 416, 417 extend from the bodies 412, 413 and have hooked free ends.

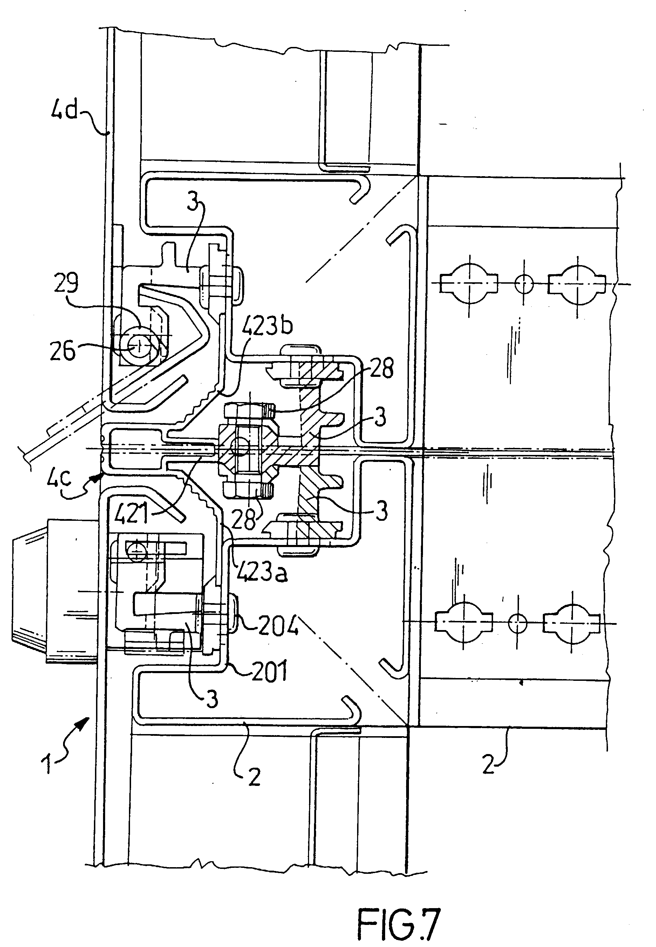

The trimming strip 4c (Figure 7) comprises a box-type body 421 whence two lugs 423a,b extend symmetrically gullwing-fashion.

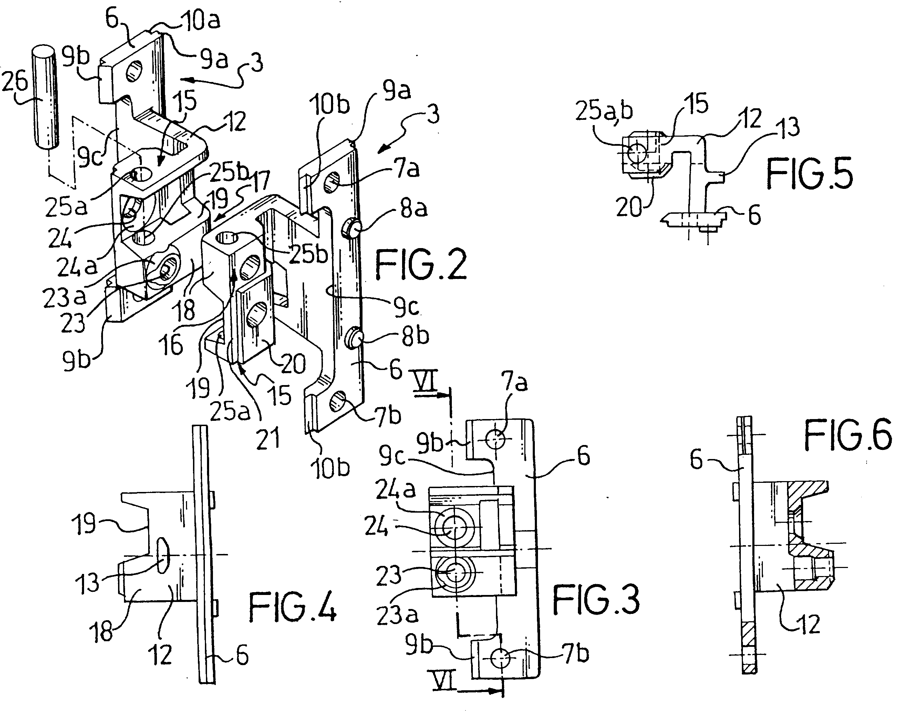

The mechanical connection element 3 (Figures 2-6) comprises a plate-like base 6 having two opposed longitudinal sides 9a,b. Side 9a is straight and formed with a groove 10a which fully spans its length; side 9b is a mixed pattern with a middle portion defining a recess 9c included between end portions occupied by a groove 10b. The base 6 is provided with two oppositely located holes 7a,b. In addition, located intermediate to the holes 7a,b are two cylindrical projections having complementary shapes to the openings 202b formed in the section bars 201 for alignment purposes, that is to ensure proper location and alignment of element 3 to its corresponding section bar 201. Such holes 7a,b and the projections 8a,b jointly constitute a first means of attaching the mechanical connection element 3 to the frame 2.

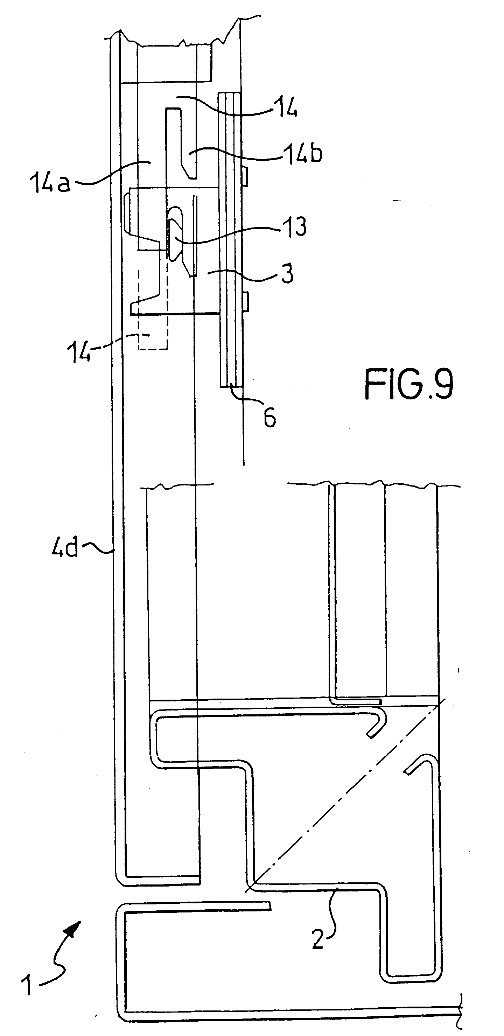

A web 12 extends square to the base 6 at the location of the recess 9c. The web 12 is bent ell-like and has a dog 13 formed integrally on its opposite wall from the recess 9c, which dog is adapted to provide abutment for a latch 14 (Figure 9) in a manner to be explained. Defined on the remote end of the web 12 from the base 6 is a head 15 defining two opposed surfaces 16, 17. Surface 17 is patterned into a tenon 18 and a mortise 19 lying transverse to the base 6. On surface 16 at the mortise 19, there is formed a raised shoulder 20 which stands slightly to the rear from the free edge of surface 16 to define a groove 21 whose function will be explained hereinafter.

The tenon 18 and mortise 19 are passed through by respective holes 23, 24 of which hole 23 is threaded. At the entrance of the holes 23, 24 facing toward the surface 17, there are respectively provided an elevation 23a and a mating flare 24a. The tenon 18 and mortise 19 with their corresponding holes 23, 24 jointly constitute a second means for end fastening together two mechanical connection elements 3, or uniting one of such elements 3 with a panel 4a. The head 15 is drilled along a direction parallel to the base 6 and perpendicular to the holes 23, 24 so as to define two holes 25a,b providing a socket for a hinge pin 26 (Figures 2 and 7).

The mechanical connection element 3 is attached to the section bar 201 of the frame 2 by means of the first fasteners, that is with the projections 8a,b received in the holes 202b and with screws or rivets 204 (Figures 7 and 8) correspondingly fitted into the holes 7a,b.

The panels 4a (Figure 8) are attached rigidly to the mechanical connection element 3 by threaded engagement of a screw 27 in the threaded hole 23 of the head 15, thereby as the mechanical connection element 3 is attached to the frame 2, the panel 4a is made fast with said frame.

Two mechanical connection elements 3 can be end joined, with the tenon 18 of one received matingly in the mortise of the other, and vice versa. This joint is completed by passing two screws 28 through the holes 24 and threading them into the holes 23 (Figure 7).

Two sections bars 201 can be coupled together by securing two mechanical connection elements 3 thereon through their respective bases 6 and joining the heads 15 together as explained hereinabove (Figure 7).

The door wings 4d (Figure 7) can be hinge-connected to the frame 2 by using an element 3 provided with a pin 26, as the first hinge member, and a corresponding eye 29 rigid with the door wing 4d, as the second hinge member. The hinge pin 26 would be received rotatably in the hinge eye 29.

To allow the door wing 4d to be held in the shut position thereof, the door wing would be provided with a conventional latch 14 (Figure 9) which is mounted slidably at the free edge of the door wing, parallel to the hinge axis. The latch 14 has a bifurcated free end, and between its prongs 14a,b, there is arranged to abut the dog 13 of an element 3 mounted at a suitable location on the frame 2.

The trimming strip 4c (Figure 7), to be fitted over the joint between two adjacent section bars, is secured on the cabinet 1 by snap engaging the free ends of the lugs 423a,b into the grooves 10b of the mechanical connection elements 3, with the section bar body 421 to bear onto the heads 15 of the two mechanical connection elements 3.

The trimming strip 4b (Figure 5) is made fast with the cabinet 1 by snap engaging the hooked ends of the lugs 416, 417 into the grooves 10a and 21 of one element 3. Accordingly, this mechanical connection element will have its head 15 and part of its web 12 received in the channel-like seat 410. The ridge 415 acts as a spacer to the surface 17 of the head 15.

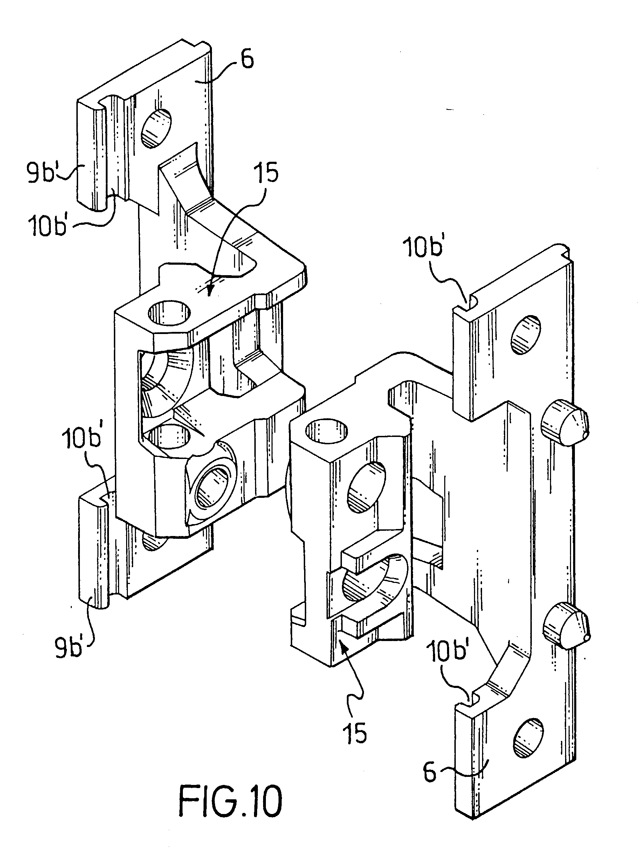

Finally, Figure 10 shows two mechanical connection elements according to the invention which have minor changes relative to the elements shown in Figure 2. The most relevant change is a different shape of the mixed pattern, referred to as 9b', whose end portions are provided with a groove 10b' on the surface of base 6 facing toward the head 15. This shape results in plastic profiles being better fastened and manufacturing of the connection elements by moulding being easier.

The invention allows unit furniture to be manufactured for sale as assembly kits including the pre-punched section bars required for assembling the frame 2, the curtaining means 4a,b,c,d, and mechanical connection elements 3 of a single type. These mechanical connection elements, for the novel structure just described, enable the various types of curtaining members to be mounted to the frame, either fixedly or pivotally, can provide an abutment for a closure latch, and a means of fastening together section bars from different cabinets to tie adjacent cabinets together into a unitary whole.

Advantageously, such cabinets can be assembled in the field in a particularly simple way, thus achieving savings in resources, both in terms of time, and storage space and related costs.

In addition, these being unit or assembly cabinets, it becomes possible to later expand them, where found necessary.

## Claims

1. A mechanical connection element for erecting unit furniture comprising a base (6) having first means (7a,b;8a,b;204) of attachment to a structural part (201) of an item of furniture, a web (12) extending from said base, and a head (15) formed on the remote web end from the base, said head being formed with a first pair of holes (25a,b) aligned along a common axis parallel to the base and constituting sockets for a hinge pin (26) to hingedly interconnect two structural parts of the item of furniture through said element, characterized in that said head comprises a second releasable attachment means (18,19;23.24) ) for a head of a second connection element or another structural part of the item of furniture.

2. An element according to Claim 1, wherein said second attachment means comprise at least one second hole pair (23,24) through said head having a perpendicular axis to the axis of the first pair (25a,b).

3. An element according to either Claim 1 or 2, wherein said head has a surface (17) to a pattern mating with a corresponding surface of the head of a second connection element.

4. An element according to Claim 3, wherein said patterned surface includes at least one tenon (18) and at least one mortise (19) arranged to lie adjacent and parallel to each other.

5. An element according to Claim 4, wherein said tenon and mortise are mating designs both in contour shape and arrangement on said head.

6. An element according to Claim 2, wherein one (23) in said second hole pair is threaded, the other (24) being smooth.

7. An element according to Claim 1, wherein said web (12) is formed with a dog-shaped lug (13) adapted to provide abutment for the rod of a latch (14).

8. A unit item of furniture including a frame (2) and curtaining means (4a,b,c,d) therefor, being held together by at least one connection element (3) as claimed in one or more of the preceding claims.

9. An item of furniture according to Claim 8, wherein said curtaining means comprise section bars (4b,c) having at least one lug (416,417;423a,b) adapted to snap fit into a corresponding groove (10a,b;21) formed in said connection element (3).

## Patentansprüche

1. Ein mechanisches Verbindungselement zum Aufrichten von Einheitsmobiliar, welches eine Basis (6) mit einer ersten Einrichtung (7a, b; 8a, b; 204) zur Befestigung an ein strukturelles Teil (201) eines Mobiliargegenstands, einen Steg (12), der sich von der Basis erstreckt, und einen Kopf (15) aufweist, der auf dem von der Basis entfernten Stegende gebildet ist, wobei der Kopf mit einem ersten Paar von Löchern (25a, b) gebildet ist, die entlang einer gemeinsamen Achse parallel zu der Basis ausgerichtet sind und Sockel für einen Scharnierstift (26) bilden, damit zwei strukturelle Teile des Möbelgegenstandes durch das Element scharniermäßig miteinander verbunden werden, dadurch gekennzeichnet, daß der Kopf eine zweite lösbare Befestigungseinrichtung (18, 19; 23, 24) für einen Kopf eines zweiten Verbindungselements oder eines anderen strukturellen Teils des Mobiliargegenstandes aufweist.

2. Ein Element gemäß Anspruch 1, bei dem die zweite Befestigungseinrichtung mindestens ein zweites Lochpaar (23, 24) durch den Kopf aufweist, das eine zu der Achse des ersten Paars (25a, b) senkrechte Achse aufweist.

3. Ein Element gemäß entweder Anspruch 1 oder Anspruch 2, bei dem der Kopf eine Oberfläche (17) in einem Muster aufweist, das mit einer entsprechenden Oberfläche des Kopfs eines zweiten Verbindungselements zusammenpaßt.

4. Ein Element gemäß Anspruch 3, bei dem die gemusterte Oberfläche zumindest einen Zapfen (18) und zumindest eine Nut (19) aufweist, die angeordnet sind, um nebeneinander und zueinander parallel zu liegen.

5. Ein Element gemäß Anspruch 4, bei dem der Zapfen und die Nut sowohl in der Konturform als auch in der Anordnung auf dem Kopf zusammenpassende Entwürfe sind.

6. Ein Element gemäß Anspruch 2, bei dem eines (23) des zweiten Lochpaares mit einem Gewinde versehen ist, wobei das andere (24) glatt ist.

7. Ein Element gemäß Anspruch 2, bei dem der Steg (12) mit einem nasenförmigen Ansatz (13) gebildet ist, der angepaßt ist, um ein Anstoßen für den Stab eines Riegels (14) zu schaffen.

8. Ein Einheitsmobiliargegenstand, der einen Rahmen (2) und eine Vorhangeinrichtung (4a, b, c, d) für denselben aufweist, die durch mindestens ein Verbindungselement (3) gemäß einem oder mehreren der vorhergehenden Ansprüche zusammengehalten werden.

9. Ein Mobiliargegenstand gemäß Anspruch 8, bei dem die Vorhangeinrichtung Abschnittsbalken (4b, c) mit mindestens einem Ansatz (416, 417; 423a, b) aufweist, der angepaßt ist, um in eine entsprechende Rille (10a, b; 21), die in dem Verbindungselement (3) gebildet ist, einschnappmäßig zu passen.

## Revendications

1. Elément mécanique de raccord pour le montage d'un élément d'ameublement, comprenant une base (6) équipée de premiers moyens (7a, b ; 8a, b ; 204) de fixation à une partie (201) de la structure d'un élément d'ameublement, une aile (12) partant de ladite base et une tête (15) formée sur l'extrémité de l'aile qui est distante de la base, ladite tête comprenant deux premiers trous (25a, b) qui sont alignés le long d'un axe commun parallèle à la base et qui constituent des cavités destinées à une broche d'articulation (26) afin d'assembler par articulation deux parties de la structure de l'élément d'ameublement au moyen dudit élément, caractérisé en ce que ladite tête comprend un second moyen de fixation amovible (18, 19 ; 23, 24) destiné à une tête d'un second élément de raccord ou d'une autre partie de la structure de l'élément d'ameublement.

2. Elément selon la revendication 1, dans lequel ledit second moyen de fixation comprend au moins deux seconds trous (23, 24) qui traversent ladite tête et qui ont un axe perpendiculaire à l'axe des deux premiers (25a, b).

3. Elément selon l'une ou l'autre des revendications 1 et 2, dans lequel ladite tête comporte une surface (17) ayant un profil complémentaire de celui d'une surface correspondante de la tête d'un second élément de raccord.

4. Elément selon la revendication 3, dans lequel ladite surface profilée comprend au moins un tenon (18) et au moins une mortaise (19) disposés de manière à être contigus et parallèles l'un à l'autre.

5. Elément selon la revendication 4, dans lequel lesdits tenon et mortaise sont réalisés de manière à être complémentaires aussi bien en ce qui concerne la forme de leur contour que leur disposition sur ladite tête.

6. Elément selon la revendication 2, dans lequel l'un (23) desdits seconds deux trous est taraudé, l'autre (24) étant lisse.

7. Elément selon la revendication 1, dans lequel ladite aile (12) comporte une oreille en forme de cliquet (13) destinée à constituer une butée pour la tige d'un verrou (14).

8. Elément d'ameublement monobloc comprenant un bâti (2) et des moyens (4a, b, c, d) de masquage de celui-ci qui sont assemblés par au moins un élément de raccord (3) tel que spécifié dans l'une ou plusieurs des revendications précédentes.

9. Elément d'ameublement selon la revendication 8, dans lequel lesdits moyens de masquage comprennent des barres profilées (4b, c) comportant au moins une oreille (416, 417 ; 423a, b) destinée à s'ajuster par encliquetage dans une rainure correspondante (10a, b ; 21) réalisée dans ledit élément de raccord (3).
